# EUROPEAN PATENT SPECIFICATION

(11) **EP 1 205 956 B1**
(45) Date of publication and mention of the grant of the patent: **23.08.2006**
(21) Application number: 01126399.3
(22) Date of filing: 07.11.2001
(51) Int. Cl.: H01H 25/00, G05G 9/047

(54) **Manual input device using a motor as an actuator for applying an external force to its manual control knob**
Manuelles Eingabegerät welches einen Motor zum Erzeugen einer externen Kraft an seinem manuellen Steuerdrehknopf verwendet
Dispositif d'entrée manuel à l'aide d'un moteur comme actionneur pour appliquer une force externe à son bouton de commande manuel

(30) Priority: 10.11.2000 JP 2000343987
(43) Date of publication of application: 15.05.2002
(73) Proprietor: ALPS ELECTRIC CO., LTD., Tokyo 145-8501 (JP)
(72) Inventor: Onodera, Mikio, Otsuka-cho Ota-ku, Tokyo 145-8501 (JP)
(74) Representative: Klunker . Schmitt-Nilson . Hirsch

(56) References cited:
- EP-A- 0 893 750
- WO-A-99/27435
- DE-A- 19 752 056
- DE-A- 19 856 722
- DE-U- 20 014 425

## Description

### BACKGROUND OF THE INVENTION

### 1. Field of the Invention

The present invention relates to a manual input device which allows central control of various electronic apparatuses by use of a manual control knob, for example, mounted in a car and particularly to a manual input device which uses a motor as an actuator for applying an external force to its manual control knob.

### 2. Description of Related Art

Modern cars are equipped with various electronic apparatuses such as an air conditioner, radio, television, CD player and navigation system. If the driver tries to operate many such electronic apparatuses individually using the respective controls provided on these apparatuses while he is driving, he may be unable to drive the car smoothly. Hence, as means to allow the driver to turn on or off any desired electronic apparatus and select a function or perform any other similar operation without interference with his/her safe drive, a manual input device which enables the driver to control various electronic apparatuses through manipulation of a single manual control knob has been suggested.

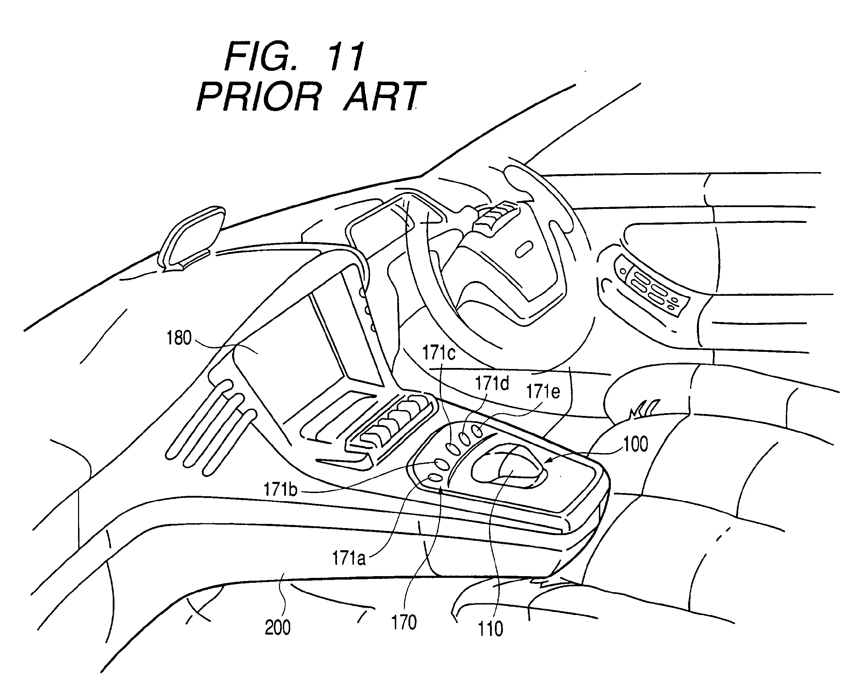

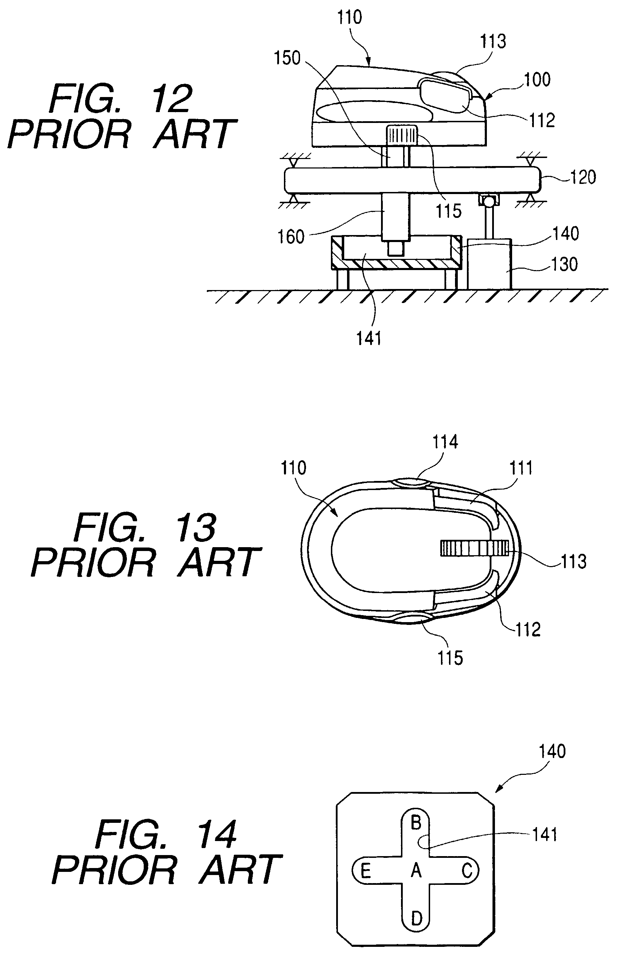

This kind of manual input device as prior art will be explained referring to Figs. 11 to 14. Fig. 11 shows an example of a manual input device installed in the car; Fig. 12 is a side view illustrating a suggested conventional manual input device; Fig. 13 is a top view illustrating the manual control knob of the manual input device as shown in Fig. 12; and Fig. 14 is a top view illustrating the guide plate built in the manual input device as shown in Fig. 12.

As illustrated in Fig. 11, this manual input device 100 is installed in a console box 200 located between the driver's seat and the front passenger's seat. As shown in Fig. 12, this conventional manual input device 100 is mainly composed of the following: a manual control knob 110 which has two clicking switches 111 and 112 as signal input means and three rotary variable resistors 113, 114 and 115 (see Fig. 13); an XY table 120 which is driven in two directions perpendicular to each other (a direction perpendicular to the side view in Fig. 12 and the right-left direction as you face the figure) by the manual control knob 110; a stick controller 130 as a position sensor which inputs a signal to an external apparatus according to the direction and amount of movement of the XY table 120; and a guide plate 140 which has an engagement with an engagement pin 160 projecting from the bottom face of the XY table 120.

The manual control knob 110 and XY table 120 are connected through a connecting shaft 150 and the XY table 120 and guide plate 140 are engaged with each other by the tip of the engagement pin 160 movably inserted in the guide groove 141 of the guide plate 140. This guide groove 141 may have any shape which allows the tip of the engagement pin 160 to be moved in specific directions. For instance, as shown in Fig. 14, when a guide groove with a planar cross shape 141 is engraved on the upper surface of the guide plate 140, the engagement pin 160 can be moved from a center A toward end points B, C, D and E as shown, in two directions which intersect almost perpendicularly. In other words, the engagement pin 160 can be moved along the guide groove 141 of the guide plate 140 through the XY table 120 by manipulating the manual control knob 110 so that, with the tip of the engagement pin 160 at end point A, B, C, D or E in the guide groove 141, the information on that engagement position (positional signal) is outputted from the stick controller 130. This means that it is possible to select a car-mounted electronic apparatus function to be operated (a function to be controlled). Once the desired electronic apparatus function is selected in this way, the selected function can be adjusted or switched on or off by appropriately manipulating the two clicking switches 111 and 112 and the three rotary variable resistors 113, 114 and 115 in the manual control knob 110.

As shown in Fig. 11, this manual input device 100 allows central control of a plurality of car-mounted electronic apparatuses by the use of a combination of a switch device 170 and a display 180 and a computer as a controller (not shown in the figure). Here, the switch device 170 enables the user to select a desired electronic apparatus among the ones mounted in the car; the display 180 indicates various information such as the name of the electronic apparatus selected through the switch device 170 and what type of operation has been done by means of the manual input device 100; and the computer (not shown) controls these. The switch device 170 is installed in the console box 200 and its control switches 171a to 171e are located adjacent to the manual input device 100 and connected with different electronic apparatuses, respectively. If the control switches 171a to 171e are respectively connected to a car-mounted air conditioner, radio, television, CD player and navigation system, the user can turn on or off the air conditioner or gives the manual input device 100 an instruction to specify the air conditioner mode using the control switch 171a, or turn on or off the radio or gives the manual input device 100 an instruction to specify the radio mode; likewise, by operating the other control keys 171c to 171e, the user can turn on or off the corresponding electronic apparatuses or give the manual input device 100 an instruction to specify their modes. The display 180 such as a liquid crystal display is conveniently located for a person in the driver's seat and the computer is built in the console box 200.

While it is possible to select a function of the electronic apparatus selected through the switch device 170 or make a functional adjustment using the manual input device 100, which functions are selectable or adjustable through the manual input device 100 varies depending on the type of electronic apparatus selected. If the air conditioner mode is selected using the switch device 170, the function of "air flow rate control" is selected by manipulating the manual control knob 110 to position the engagement pin 160 at the end point B of the guide groove 141 of the guide plate 140 and pushing in the clicking switch 111 with a click; likewise the function of "air blow-off position control," the function of "air blow-off direction control" and the function of "temperature control" are selected by clicking the clicking switch 111 to position the pin 160 at the end points C, D, and E of the guide groove 141, respectively.

Once one of these control functions has been selected, the selected function can be adjusted by manipulating the rotary variable resistors 113 to 115. For example, if the air conditioner mode is selected by means of the switch device 170 and the function of "air flow rate control" is selected by means of the clicking switch 111, the air conditioner's air flow rate can be controlled by manipulating the rotary variable resistor 113; likewise, if the function of "air blow-off position control" is selected, the air conditioner's air blow-off position can be controlled by manipulating the rotary variable resistors 114 and 115. Further, if the radio mode is selected by means of the switch device 170 and the function of "volume control" is selected by means of the clicking switch 111, the radio's volume can be controlled by manipulating the rotary variable resistor 113; likewise if the "tuning" function is selected in the radio mode, tuning of the radio can be done by manipulating the rotary variable resistors 114 and 115.

However, the conventional manual input device 100 is not always easy to operate because the driver cannot know which electronic apparatus and which function are currently selected, which is likely to cause erroneous operation of the manual control knob 110.

EP-A-0 893 750 discloses a manual input device in which a driving shaft of a manual control knob is tiltably supported such that the knob can be tilted and also rotated. In addition, the knob may be pushed down. In order to allow tilting the knob, a lower end portion of a supporting shaft of the control knob comprises a ball member which is received in a ball bearing. A tilting preventing mechanism is provided comprising a cam wheel cooperating with a motor driving the cam wheel. In a certain position of the cam wheel, the control knob cannot be tilted.

### SUMMARY OF THE INVENTION

In view of the above problem in the prior art, the present invention provides a compact, highly maneuverable car-mounted input device which enables electronic apparatus manipulation as desired with reliability.

In order to solve the problem, a manual input device according to the present invention comprises the components defined by claim 1.

The force of vibration around the driving shaft of the rotating motor can be applied to the manual control knob.

In this constitution, the actuator is laterally movably fitted to the frame and the direction and amount of lateral movement of the actuator are detected by the first position sensor and the direction and amount of rotation of the driving shaft of the actuator are detected by the second position sensor so that the car-mounted electronic apparatus whose function is to be controlled can be selected by changing the direction of lateral movement of the actuator and the function of the car-mounted electronic apparatus thus selected can be adjusted according to the amount of rotation of the driving shaft and therefore the selection and functional adjustment of the desired car-mounted electronic apparatus can be carried out using a single manual control knob. Furthermore, the manual control knob is fitted to the driving shaft of the actuator and an external force which depends on the manipulation of the manual control knob is applied to the manual control knob, so it is possible to give the user a tactile sensation to notify him/her of how the manual control knob has been manipulated as he/she touches it without seeing it; in short, the user can know with a tactile sensation whether or not the manual control knob is being manipulated in the desired direction by the desired amount at the desired speed. This prevents erroneous manipulation of the manual control knob, ensuring high maneuverability of the manual control knob. Also, in this constitution, since the manual control knob is fitted to the driving shaft of the actuator, a power transmission mechanism to connect the manual control knob and the driving shaft is not needed and thus the manual control knob can be compact and light. Still more, because only one actuator is used, it is also easy to reduce the size and weight of the manual input device.

### BRIEF DESCRIPTION OF THE DRAWINGS

Preferred embodiments of the present invention will be described in detail based on the followings, wherein:
Fig. 1 is a perspective view illustrating a car-mounted input device installed in the dashboard according to an embodiment of the present invention;
Fig. 2 is a top view illustrating the inside of a car in which a car-mounted input device according to an embodiment of the present invention is installed;
Fig. 3 is a sectional view illustrating a mechanism including a manual control knob;
Fig. 4 is a top view illustrating a guide plate provided in the mechanism and its surrounding area;
Fig. 5 is a top view illustrating an example of connection between the main shaft of the actuator and the rotary shaft of the code-disc which are provided in the mechanism;
Fig. 6A shows which type of car-mounted electric apparatus is selected according to the direction of manipulation of the manual control knob according to an embodiment of the present invention;
Fig. 6B illustrates the directions in which the manual control knob can be moved according to an embodiment of the present invention;
Fig. 7A illustrates which type of function is selected according to the direction of rotation of the manual control knob according to an embodiment of the present invention;
Fig. 7B illustrates the directions in which the manual control knob can be rotated according to an embodiment of the present invention;
Fig. 8 is a block diagram showing the control system of the actuator according to an embodiment of the present invention;
Figs. 9A through 9E are graphs illustrating patterns of external force applied to the manual control knob according to an embodiment of the present invention;
Fig. 10 is a flowchart showing the control sequence of the actuator according to an embodiment of the present invention; Fig. 11 shows the inside of a car in which a conventional car-mounted input device is installed;
Fig. 12 is a side view of a conventional car-mounted input device as conventionally suggested;
Fig. 13 is a top view of the car-mounted input device as shown in Fig. 12;.and
Fig. 14 is a top view of a guide plate built in the car-mounted input device as shown in Fig. 12.

### DETAILED DESCRIPTION OF THE PREFERRED EMBODIMENTS

Next, a manual input device according to an embodiment of the present invention will be described in detail referring to the attached drawings.

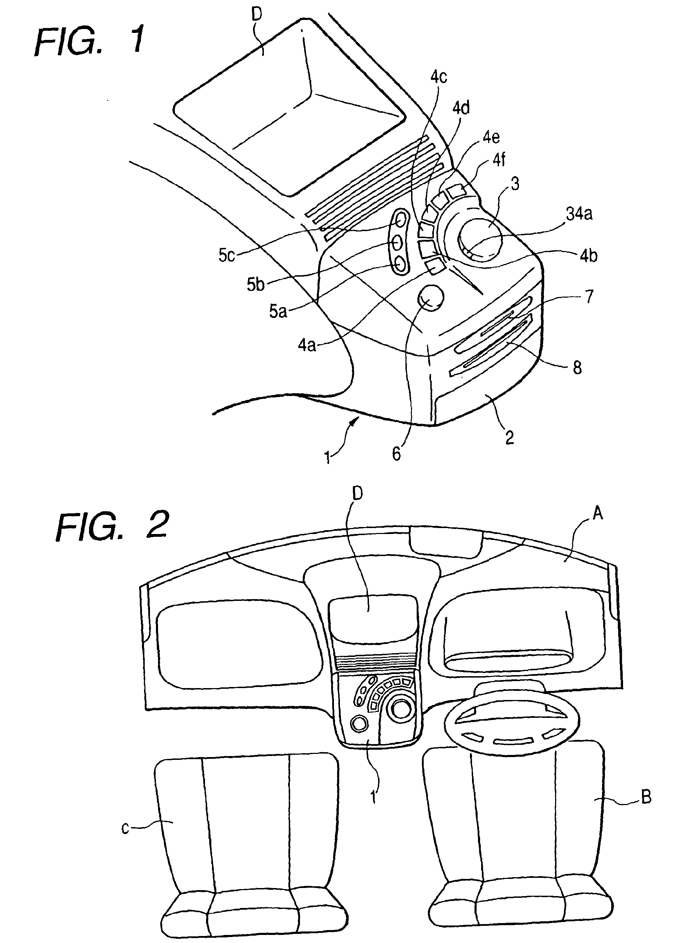

Fig. 1 is a perspective view illustrating a car-mounted input device installed in the dashboard according to an embodiment of the present invention and Fig. 2 is a top view illustrating the inside of a car in which a car-mounted input device according to an embodiment of the present invention is installed.

As clearly seen in Fig. 1, a manual input device according to an embodiment of the present invention, has a housing 2 which is a rectangular case of a required size, on the top surface of which are a manual control knob 3, six pushbutton switches 4a, 4b, 4c, 4d, 4e and 4f which are arranged along an arc with the position of the manual control knob 3 as its center, three pushbutton switches 5a, 5b and 5c which are arranged concentrically around the group of the six pushbutton switches, and a volume control knob 6. On the front of the housing 2 are a card slot 7 and a disk slot 8. This manual input device is to be located on the dashboard A, between the driver's seat B and the front passenger's seat C, as shown in Fig. 2; it works in conjunction with a display D provided on the dashboard A and an invisible computer (controller) housed in the dashboard A in order to perform the required functions.

The above nine pushbutton switches 4a, 4b, 4c, 4d, 4e, 4f, 5a, 5b and 5c are individually connected with car-mounted electric apparatuses to be operated using the manual input device 1 such as an air conditioner, radio, television, CD player, and car navigation system. Which pushbutton switch should be associated with which car-mounted electric apparatus can be freely determined. In this example, the respective pushbutton switches of the manual input device 1 are connected with the following functions or apparatuses: the pushbutton switch 4a for menu selection; the pushbutton switch 4b for the telephone; the pushbutton switch 4c for the air conditioner; the pushbutton switch 4d for the car navigation system; the pushbutton switch 4e for the radio; the pushbutton switch 4f for the card reader/writer or disc drive; the pushbutton switch 5a for attitude control of the car-mounted input device 1; the pushbutton switch 5b for on-off control of the liquid crystal shutter provided on the whole surface of the display D; and the pushbutton switch 5c for the television. By pushing in the knob of any desired pushbutton switch, the user can select the car-mounted electric apparatus connected with that pushbutton switch. The surface of each pushbutton switch knob bears a letter (or letters) or a pictograph which represents the car-mounted electric apparatus connected with the switch (not shown in the figure).

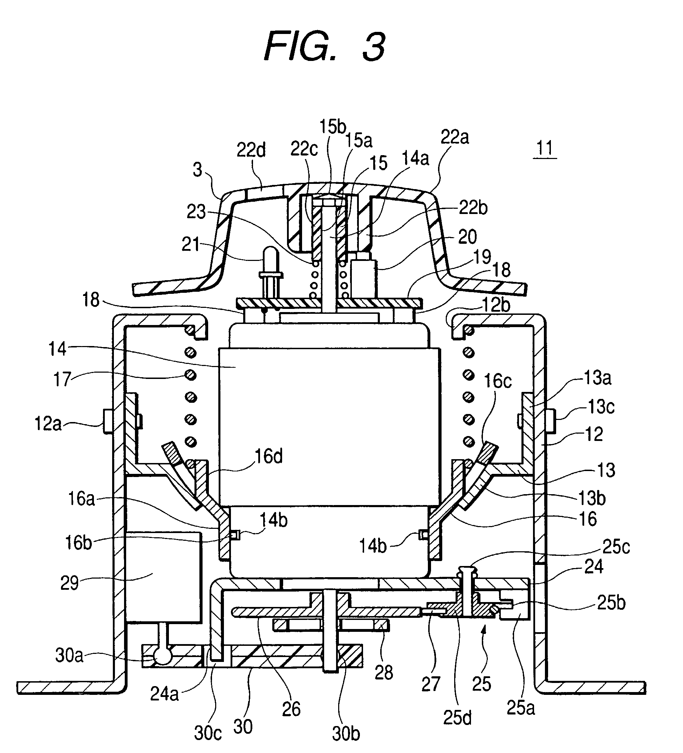

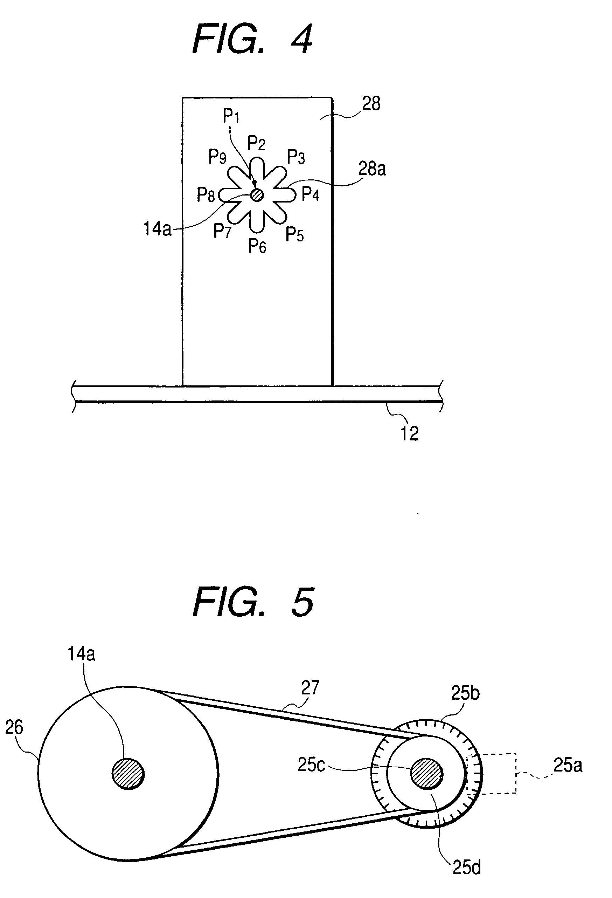

Next, the mechanism which includes the manual control knob 3 will be explained referring to Figs. 3 through 5. Fig. 3 is a sectional view illustrating a mechanism including the manual control knob 3; Fig. 4 is a top view illustrating the guide plate provided in the mechanism and its surrounding area; and Fig. 5 is a top view illustrating an example of a connection between the main shaft of the actuator provided in the mechanism and the rotary shaft of the code-disc.

As can be clearly understood from Fig. 3, the mechanism 11 is mainly composed of the following components: a nearly cylindrical frame 12; an actuator holder 13 located on the inner surface of the frame 12; an actuator 14; a slider 15 fitted to the driving shaft 14a of the actuator 14; a bracket 16 which movably holds the actuator 14 on the actuator holder 13; a first spring member 17 set between the bracket 16 and the frame 12; a printed circuit board 19 fitted through a boss 18 to the top surface of the actuator 14; a switch 20 and a lamp 21 both of which are connected with the printed circuit board 19; a manual control knob 3 fitted to the driving shaft 14a of the actuator 14; a second spring member 23 which constantly gives the manual control knob 3 an upward spring tension against the actuator 14; an encoder mounting plate 24 fitted to the bottom surface of the actuator 14; an encoder (second position sensor) 25 fitted to the encoder mounting plate 24; a pulley 26 fitted to the driving shaft 14a of the actuator 14; a belt 27 which connects the pulley 26 and the driving shaft of the encoder 25; a guide plate 28 which is fitted to the inner surface of the frame 12, beneath the actuator 14; a stick controller (first position sensor) 29 fitted to the inner surface of the frame 12; and a connecting bar 30 which connects the stick controller 29 and the driving shaft 14a of the actuator 14.

The actuator holder 13 consists of a fixing part 13a and a receiving part 13b. The fixing part 13a is a cylinder with a diameter which fits the inner surface of the frame 12 and the receiving part 13b is spherical. The actuator holder 13 is fixed with the fixing part 13a fixed on the inner surface of the frame 12 with screws 13c with its spherical receiving part 13b down.

If the actuator 14 is a rotating motor, the force around the driving shaft 14a can be applied to the manual control knob 3 through the driving shaft 14a.

The slider 15 is a cylinder with a diameter which fits the outer surface of the driving shaft 14a and part of it has an engagement groove 15a (detailed later) for integration of the manual control knob 3. This slider 15 is held pushed upwards by the tension of the second spring member 23 set between it and the printed circuit board 19 and the upward movement of the slider 15 is limited by the head 15b of the screw screwed in the tip of the driving shaft 14a.

The bracket 16 is composed of the following: a cylindrical fixing part 16a having a diameter which fits the outer surface of the actuator 14; one or more snap claws 16b (two claws in the example of Fig. 3) projecting from the inner surface of the fixing part 16a; a spherical sliding part 16c which has almost the same curvature as the above receiving part 13b; and a spring support 16d cut and raised from the sliding part 16c. The bracket 16 is fitted to the actuator 14 by engaging the lower part of the actuator 14 with the fixing part 16a and fitting the snap claw 16b into a snap groove 14b formed on the outer surface of the lower part of the actuator 14. The actuator 14 with the bracket 16 fitted to it is held on the frame 12 by letting the sliding part 16c rest on the actuator holder 13 and setting the first spring member 17 between the spring support 16d and a spring support 12b formed on the frame 12. Therefore, the actuator 14 can be moved in any direction with respect to the frame 12 and when the force to manipulate it is removed, it is automatically reset to its upright position due to the elasticity of the first spring member 17.

The manual control knob 3 is composed of the following: a cap-shaped body 22a whose size is suitable for manipulation with fingers; a switch operating part 22b which is almost cylindrical and positioned vertically downwards from the lower face of the body 22a; an engagement claw 22c formed on the inner surface of the switch operating part 22b and an illuminating part 22d formed on part of the body 22a. It is integrated with the slider 15 by engaging the engagement claw 22c with the engagement groove 15a formed in the slider 15. The position of the manual control knob 3 with respect to the slider 15 is adjusted so that the tip of the switch operating part 22b faces the switch 20 on the printed circuit board 19 and the illuminating part 22d faces the lamp 21 on the printed circuit board 19.

The encoder 25 consists of a light emitting/detecting element 25a, a code-disc 25b, a rotary shaft 25c which enables rotation of the code-disc 25b, and a pulley 25d fixed to the rotary shaft 25c. As shown in Fig. 5, a belt 27 is wound around the pulley 25d and the pulley 26 fitted to the driving shaft 14a of the actuator 14 and a positional signal is outputted from the light emitting/detecting element 25a according to the direction and amount of rotation of the driving shaft 14a. A tensioner which maintains the tension of the belt 27 constant can be attached to the belt, although not graphically illustrated.

The guide plate 28 is intended to limit the direction and amount of manipulation of the manual control knob 3. As shown in Fig. 3, the driving shaft 14a of the actuator 14 is passed through the guide groove 28a made in the guide plate 28 so as to limit the direction and amount of manipulation of the manual control knob 3. Fig. 4 shows an example of the guide groove 28a made in the guide plate 28. In this example, the guide groove consists of sub-grooves extending radially in eight directions from the center P₁. In the figure, P₂, P₃, P₄, P₅, P₆, P₇, P₈, and P₉ denote the end points of the sub-grooves of the guide groove 28a.

The stick controller 29 outputs a positional signal which depends on the direction and amount of lateral movement of the driving shaft 14a. The computer (not shown in the figures) picks up a positional signal from the encoder 25 and a positional signal from the stick controller 29 to use them to control the actuator.

The connecting bar 30 is connected with the driving shaft 29a of the stick controller 29 and the driving shaft 14a of the actuator 14 through ball joints 30a and 30b. It transmits motion of the driving shaft 14a to the driving shaft 29a. The connecting bar 30 has a sliding guide 30c through which the tip 24a of the encoder mounting plate 24 is inserted in order to limit the rotation of the connecting bar 30.

In this constitution, when the user manipulates the manual control knob 3 in the direction parallel to the guide plate 28, the force of the manipulation is transmitted through the actuator 14 to the bracket 16 and thus a slip occurs between the receiving part 13b of the actuator holder 13 and the sliding part 16c of the bracket 16, resulting in a lateral movement of the actuator 14. Since the driving shaft 14a of the actuator 14 is passed through the radial guide groove 28a in the guide plate 28, the actuator 14 is moved only in one of the directions from the center position P₁ of the guide groove 28a to end points P₂ through P₉.

As the actuator 14 is moved laterally in this way, the driving shaft 14a is also moved laterally accordingly and its lateral movement is transmitted to the driving shaft 29a of the stick controller 29 through the connecting bar 30 and a positional signal which depends on the direction and amount of lateral movement of the driving shaft 29a is outputted from the stick controller 29. This positional signal is picked up by the computer (not shown) ; thus the desired electric apparatus is selected by means of the computer. As the manipulation force applied to the manual control knob 3 is then removed, the actuator 14 is automatically reset to its upright position due to the elasticity of the first spring member 17 set between the frame 12 and bracket 16.

When the user rotates the manual control knob 3 around the driving shaft 14a, the rotating force is transmitted to the code-disc 25b through the driving shaft 14a, pulley 26, belt 27 and pulley 25 and the code-disc 25b rotates in the same direction as the manual control knob 3; then a positional signal which depends on the direction and amount of rotation of the manual control knob 3 is outputted from the light emitting/detecting element 25a of the encoder 25. This positional signal is also picked up by the computer (not shown). Accordingly the computer controls the functional adjustment of the selected electric apparatus and the operation of the actuator 14. How the actuator 14 is controlled according to positional signals from the encoder 25 will be explained later.

As the user presses the manual control knob 3 in the axial direction of the driving shaft 14a, the manual control knob 3 and the slider 15 integrally connected with it go down against the elastic force of the second spring member 23. The switch operating part 22b of the manual control knob 3 presses the switch 20 on the printed circuit board 19 and the switch 20 generates a switch signal. This switch signal is also picked up by the computer (not shown) which then confirms the selected electric apparatus and function. When the manipulation force applied to the manual control knob 3 is removed after the switch is pressed down, the manual control knob 3 is automatically reset to its upper end position due to the elasticity of the second spring member 23.

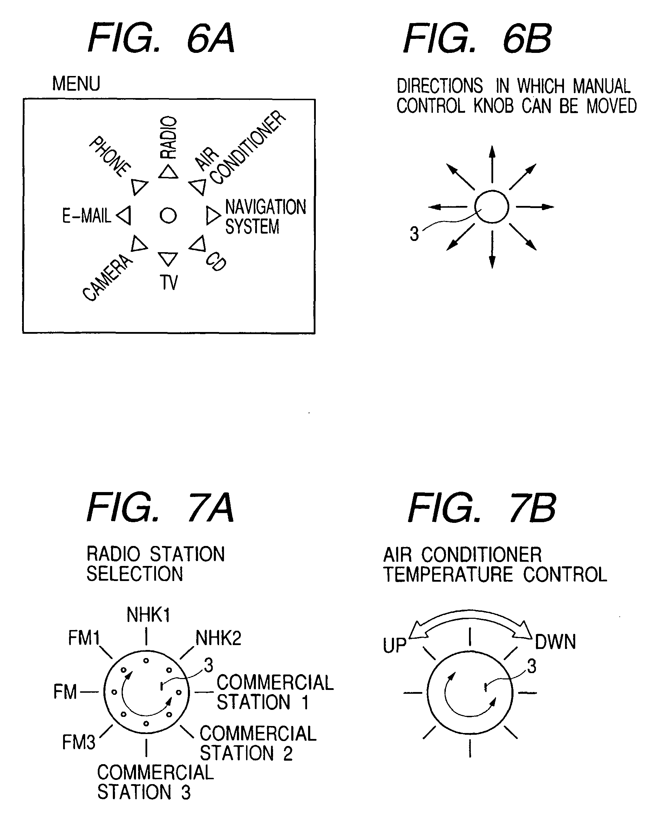

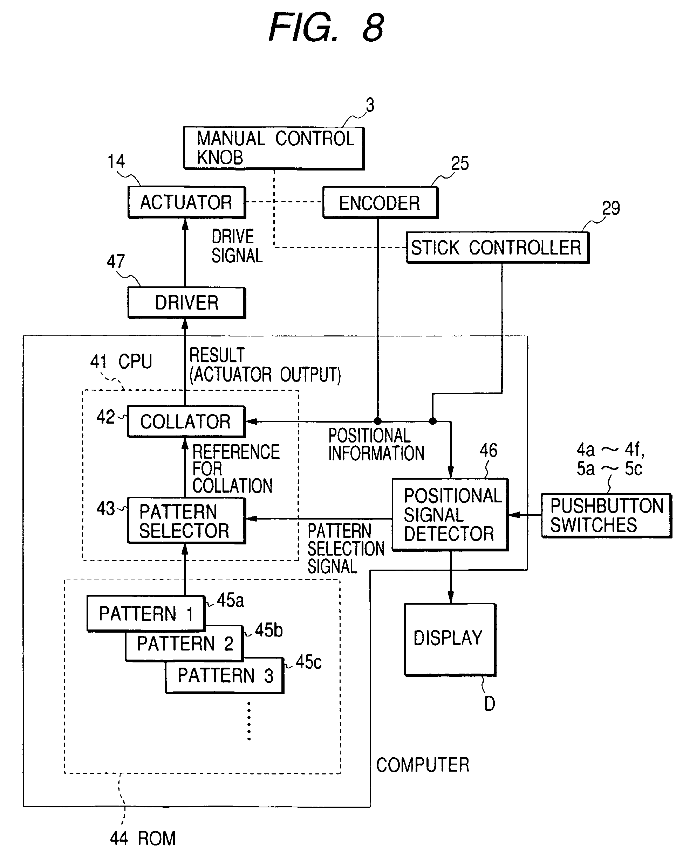

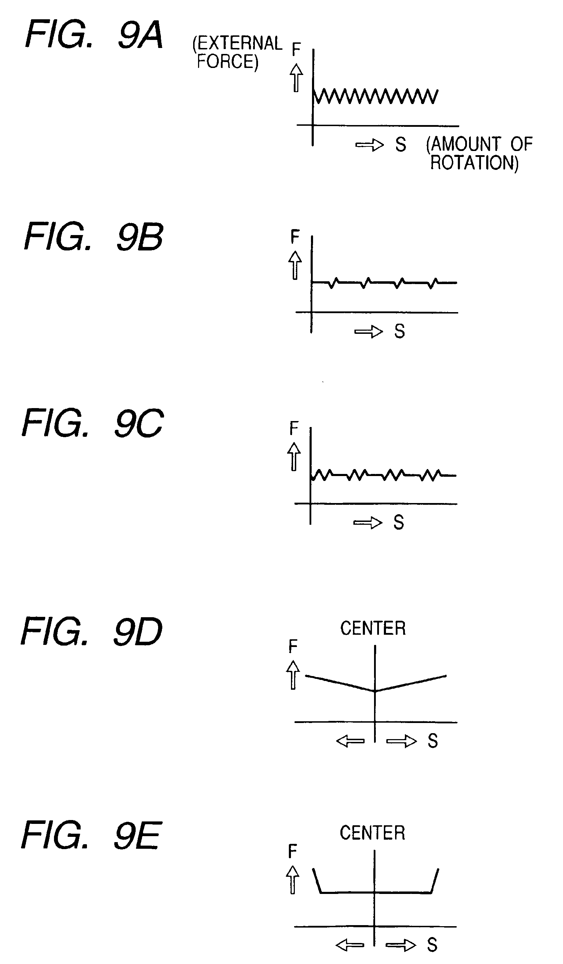

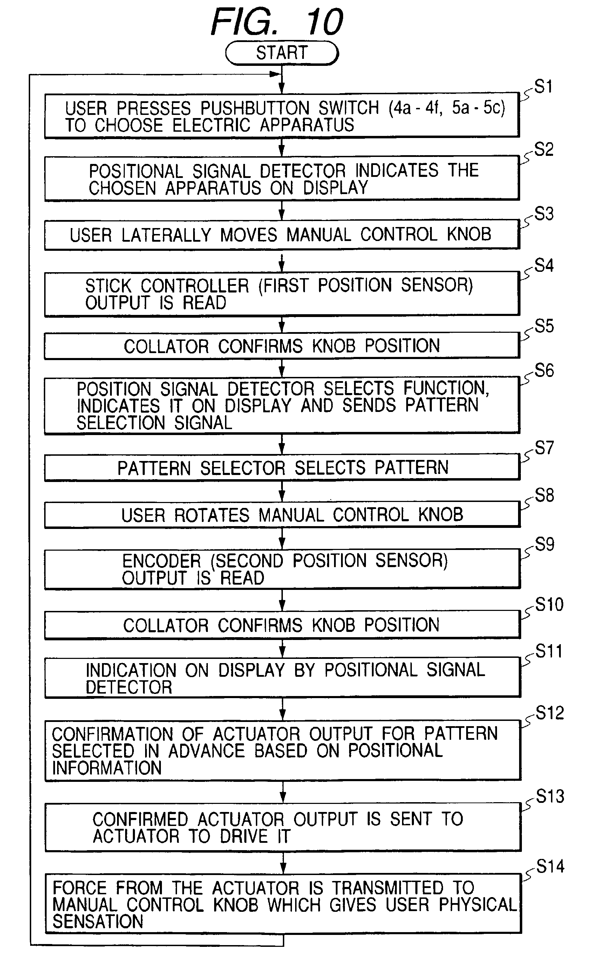

Next, how the actuator 14 is controlled according to positional signals from the encoder 25 will be explained referring to Figs. 6 through 10. Figs. 6A shows which type of car-mounted electric apparatus is selected depending on the direction in which the manual control knob 3 is manipulated while Fig. 6B illustrates the directions in which the manual control knob 3 is movable. Fig. 7A illustrates which type of function is selected depending on the direction in which the manual control knob 3 is rotated while Fig. 7B illustrates the directions in which the manual control knob 3 is rotated. Fig. 8 is a block diagram showing the control system of the actuator 14. Figs. 9A through 9E are graphs illustrating patterns of external force applied to the manual control knob 3 and Fig. 10 is a flowchart showing the control sequence for the actuator 14.

In this example, as shown in Figs. 6A and 6B, as the user moves the manual control knob 3 forward, right-forward, rightward, right-backward, backward, left-backward, leftward and left-forward from the center position of the manual control knob 3, the manual input device 1 selects the radio, air conditioner, car navigation system, CD player, television, monitor camera, e-mail and telephone, respectively. The types of electric apparatuses which are selectable with the pushbutton switches 4a through 4f and 5a through 5c provided on the manual input device 1 may be either the same as, or different from, those selectable by manipulation of the manual control knob 3. In this example (embodiment), the types of electric apparatus which are selectable with the pushbutton switches 4a through 4f and 5a through 5c are different from those selectable by manipulation of the manual control knob 3.

In this example, after selecting an electric apparatus with the manual input device 1, the function of the selected electric apparatus can be adjusted by manipulating the manual control knob 3. For example, if the radio tuning function is chosen by manipulation of the manual control knob 3, a desired station can be selected by rotating the manual control knob 3 as shown in Fig. 7A. Also, if the air conditioner temperature control function is chosen by manipulation of the manual control knob 3, the temperature setting for the air conditioner can be increased or decreased by rotating the manual control knob 3 as shown in Fig. 7B.

In the manual input device 1 according to this embodiment, the control system of the actuator 14 has a structure as shown in Fig. 8. The actuator 14 is controlled according to the sequence shown in Fig. 10 so that various patterns of external force as exemplified in Figs. 9A through 9E can be applied to the manual control knob 3 according to the way the manual control knob 3 is manipulated.

As shown in Fig. 8, in the actuator control system in this example, the CPU 41 built in the computer situated inside the dashboard A incorporates a collator 42 and a pattern selector 43 while the ROM 44 in the computer stores patterns 45a, 45b, 45c and so on which represent, in an encoded form, the zones in which the manual control knob 3 is manipulated and the actuator 14's driving conditions (output data or mode) for each manipulation zone. Further, the computer is equipped with a signal detector 46. The detector 46 picks up a signal from the stick controller 29 and sends the pattern selector 43 a pattern selection signal depending on the zone in which the manual control knob 3 is manipulated, and also displays the locus of manipulation of the manual control knob 3 on the display D.

Figs. 9A through 9E graphically exemplify driving patterns for the actuator 14 which have been stored in the ROM 44. Fig. 9A shows a pattern in which a fixed mode of vibration is applied to the manual control knob 3 regardless of the amount of rotation of the manual control knob 3; Fig. 9B shows a pattern in which as the amount of rotation of the manual control knob 3 increases, impulsive vibration is periodically applied to the manual control knob 3; Fig. 9C shows a pattern in which as the amount of rotation of the manual control knob 3 increases, another mode of vibration is periodically applied to the manual control knob 3; Fig. 9D shows a pattern in which an external force is applied so as to reset the manual control knob 3 to the center position; and Fig. 9E shows a pattern in which as the amount of rotation of the manual control knob 3 reaches a predetermined level, the manual control knob 3 is given a feel of considerable resistance. When the pattern in Fig. 9A is chosen, a feel of resistance is provided to the manual control knob 3 as it is rotated, which facilitates a fine adjustment with the manual control knob 3. When the pattern in Fig. 9B or Fig. 9C is chosen, a clicking touch is periodically given to the manual control knob 3 so that, for example, in order to select a radio station as shown in Fig. 7A, an external force is applied to the manual control knob 3 each time it is tuned in to a station, which facilitates radio station selection. If the pattern in Fig. 9D is chosen, the manual control knob 3 is automatically reset to its center position, which also facilitates, for example, temperature control of the air conditioner as shown in Fig. 7B. Also, if the pattern in Fig. 9E is chosen, the user is notified of the limits within which the manual control knob 3 can be manipulated.

Next, the sequence for the computer to control the actuator 14 will be explained by reference to Fig. 8, according to Fig. 10.

As the user presses one of the pushbutton switches 4a through 4f and 5a through 5c, the pressed switch generates a switch signal and the electric apparatus corresponding to the switch signal is chosen (step S1). The positional signal detector 46 picks up the switch signal from the pressed pushbutton switch and indicates on the display D which electric apparatus has been chosen (step S2). Then, when the user laterally moves the manual control knob 3 (step S3), the stick controller 29 outputs a signal depending on the amount and direction of lateral movement of the manual control knob 3 (step S4). The collator 42 checks the output signal from the stick controller 29 against the reference for collation and confirms the position of the manual control knob 3 as a result of lateral movement (step S5). The positional signal detector 46 picks up the output signal from the stick controller 29 and selects the electric apparatus function which depends on the position of the manual control knob 3 as a result of lateral movement and indicates, on the display D, the selected function and issues a pattern selection signal to the pattern selector 43 (step S6). The pattern selector 43 picks up the pattern selection signal and selects the pattern corresponding to that pattern selection signal, from among a plurality of patterns 45a, 45b, 45c and so on which have been stored in the ROM 44 (step S7). Then, as the user rotates the manual control knob 3 (step S8), the encoder 25 outputs a signal depending on the amount and direction of rotation of the manual control knob 3 (step S9). The collator 42 checks the output signal from the encoder 25 against the reference for collation and confirms the position of the manual control knob 3 as a result of rotation (step S10). The positional signal detector 46 picks up the output signal from the encoder 25 and indicates on the display D the state of functional adjustment (step S11). The collator 42 confirms (determines) the output of the actuator 14 from the pattern selected at step S7 and the rotated position of the manual control knob 3 as confirmed at step S10 (step S12). Then, the output as confirmed at step S12 is sent from the driver 47 to drive the actuator 14 (step S13). As a result, the manual control knob 3 is driven by the actuator 14 and the external force from the actuator 14 is transmitted to the user through the manual control knob 3 (step S14). The abovementioned sequence from S1 to S14 is repeated successively.

In this way, the manual input device 1 in this example applies a given external force to the manual control knob 3 upon rotation of the knob 3 so a tactile feedback is given to the user manipulating the knob 3, enhancing the maneuverability of the knob 3.

Furthermore, when the manual control knob 3 is rotated around the driving shaft 14a, an adjustment of the chosen function can be made. In other words, as the manual control knob 3 is rotated around the driving shaft 14a, the rotating force is transmitted through the driving shaft 14a, pulley 26, belt 27 and pulley 25d to the code-disc 25b; the code-disc turns in the same direction as the manual control knob 3 and the light emitting/detecting element 25a of the encoder 25 outputs a positional signal depending on the direction and amount of rotation of the manual control knob 3; this signal is picked up by the computer so a required functional adjustment can be made according to the sequence shown in Fig. 10.

For example, when the user tries to change the temperature setting of the air conditioner using the manual control knob 3, if the amount of manipulation (rotation) of the knob 3 is small, the temperature setting will be changed gradually, but if the amount of manipulation (rotation) is large, the temperature setting will be changed quickly. Therefore, if the user does not feel any resistance during manipulation of the knob 3, he/she tends to manipulate the knob 3 excessively and thus be unable to make a fine adjustment of the temperature setting quickly and accurately. A countermeasure to this is to arrange that when the amount of manipulation (rotation) of the manual control knob 3 exceeds a certain level, the actuator 14 is driven to give the manual control knob 3 a feel of resistance. This enables the user to get a tactile sensation which informs him/her that a fine adjustment of the air conditioner temperature setting is impossible because the manual control knob 3 has been manipulated (rotated) excessively. Then, he/she will be able to decrease the amount of manipulation (rotation) of the knob 3 and make a fine adjustment of the air conditioner temperature setting quickly and accurately. An alternative approach is to give the manual control knob 3 different levels of feel of resistance according to the amount of manipulation (rotation) of the knob 3, instead of giving a fixed level of feel of resistance when the amount of manipulation (rotation) exceeds a certain level. The above explanation has been given for a case where the speed of adjusting, for example, the air conditioner temperature setting increases with the increase in the amount of manipulation (rotation) of the manual control knob 3, but the same method of giving a feel of resistance to the manual control knob 3 can also be used for a case where the speed of adjustment increases with the increase in the speed of manipulation of the manual control knob 3.

When the user uses the pushbutton switch 5a to select the function of attitude control of the car-mounted input device 1, for example, the function of handle height adjustment, if the same level of feel of resistance is given to the manual control knob 3 regardless of the movable range from the current handle height to its moving limit end, the following problem might occur. Since the user cannot grasp the movable range of a car-mounted electric apparatus, the user would be unable to manipulate the device properly when the movable range from the current handle height to the moving limit end in the desired adjustment direction is large and the user can move the handle to the desired height quickly by increasing the amount of manipulation (rotation) of the manual control knob 3, or inversely when the movable range is small and the user has to avoid collision of the handle against the moving limit end carefully by decreasing the amount of manipulation (rotation) of the manual control knob 3. As a consequence, it might take a long time to adjust the handle height or the handle might collide against the moving limit end at high speed with an impulse. As a solution to this problem, the following approach may be used: the movable range of the handle is calculated by the car-mounted computer and the feel of resistance which matches the movable range is given to the manual control knob 3 by means of the actuator 14. This will allow the user to know the movable range of the handle tactilely when manipulating the manual control knob 3, which therefore makes it possible for the user to manipulate the manual control knob 3 properly according to the movable range. The movable range can be calculated by adding a position sensor such as an encoder to the actuator for attitude control of the car-mounted input device 1 and having the computer pick up a positional signal from the position sensor.

Another point to be considered is that some users of the manual input device 1 will be strong in physical power and other users will be weak. Therefore, if the required manipulation force (feel of resistance) of the manual control knob 3 is fixed, users who have strong physical power may experience difficulty in finely adjusting the car-mounted input device 1 while users who are weak in physical power may feel it uneasy to make a coarse adjustment of the input device 1 because its manipulation requires an effort for them. One solution to this is as follows: the manipulation force applied to the manual control knob 3 is calculated by the car-mounted computer and the feel of resistance which matches the calculated manipulation force is applied to the manual control knob 3 through the actuator 14 so that the most suitable feel of resistance can be given to each user, namely both users with strong physical power and those with weak physical power can get a satisfactory touch in manipulation. Calculation of the manipulation force applied to the manual control knob 3 can be made by the computer which picks up a positional signal from the encoder 25 and calculates the acceleration in positional signal change.

In addition to control of the feel of resistance to be applied to the manual control knob 3, it is also possible to apply different external forces for different directions in which the knob 3 is moved. For instance, if the volume of the radio or CD player is controlled as mentioned later, the user can get the feel of resistance when the knob 3 is moved so as to increase the volume, while the user can get the feel of acceleration when the knob 3 is moved so as to decrease the volume. This resolves the inconvenience that the sound volume might suddenly rise inside the car when the user tries to increase the volume. Also, this allows the user to decrease the volume quickly, which solves the problem of interference with listening to an audio device or conversation.

The abovementioned control operations can be performed using required pattern data stored in the ROM 44 of the computer as shown in Figs. 9A through Fig. 9E and Fig. 10.

The input device can also be designed so that in the operation of each electric apparatus, the pattern used for control of the actuator 14 is selected according to the user's taste from among different patterns for different outputs of the actuator 14 which have been stored in the computer. This pattern selection may be made by the user operating a pattern selector switch (not shown in the figures) located on or around the manual control knob 3. It is even possible to arrange that the computer recognizes individual users' ID and automatically selects a pattern. With this arrangement, the feel of resistance given to the manual control knob 3 can be changed as appropriate according to the user's taste, thereby making the manual control knob 3 highly maneuverable.

According to the present invention, an actuator is laterally movably fitted to a frame and the direction and amount of lateral movement of the actuator are detected by a first position sensor and the direction and amount of rotation of the driving shaft of the actuator are detected by a second position sensor so that the car-mounted electric apparatus whose function is to be controlled can be selected by changing the direction of lateral movement of the actuator and the function of the car-mounted electric apparatus thus selected can be adjusted according to the amount of rotation of the driving shaft and therefore the selection and functional adjustment of the desired car-mounted electric apparatus can be carried out using a single manual control knob. Furthermore, the manual control knob is fitted to the driving shaft of the actuator and an external force which depends on the manipulation of the manual control knob is applied to the manual control knob, so it is possible to give the user a tactile sensation to notify him/her of how the manual control knob has been manipulated as he/she touches it without seeing it; in short, the user can know with a tactile sensation whether or not the manual control knob is being manipulated in the desired direction by the desired amount at the desired speed. This prevents erroneous manipulation of the manual control knob, ensuring a high maneuverability of the manual control knob. Also, since the manual control knob is fitted to the driving shaft of the actuator, a power transmission mechanism to connect the manual control knob with the driving shaft is not needed and thus the manual control knob can be compact and light. Still more, because only one actuator is used, it is also easy to reduce the size and weight of the manual input device.

## Claims

1. A manual input device comprising:
a rotating motor (14) laterally movably fitted to a frame (12);
a manual control knob (3) fitted to a driving shaft (14a) of the rotating motor (14);
a first position sensor (29) which detects a direction and an amount of lateral movement of the rotating motor (14);
a second position sensor (25a) which detects a direction and an amount of rotation of the driving shaft (14a) of the rotating motor (14); and
a controller which inputs positional signals output from the first and second position sensors (29,25a) to control the motor (14) and applies an external force the manual control knob (3) according to the way the knob (3) is manipulated.

## Patentansprüche

1. Manuelles Eingabegerät, umfassend:
einen drehenden Motor (14), der seitlich bewegbar an einem Gehäuse (12) angebracht ist;
einen Handsteuerknopf (3), der an eine Treiberwelle (14a) des drehenden Motors (14) angesetzt ist;
einen ersten Stellungsfühler (29), der eine Richtung und einen Betrag einer seitlichen Bewegung des drehenden Motors (14) detektiert;
einen zweiten Stellungsfühler (25a), der eine Richtung und einen Betrag einer Drehung der Antriebswelle (14a) des drehenden Motors (14) detektiert, und
eine Steuerung, die Stellungssignale, welche von dem ersten und dem zweiten Stellungsfühler (29, 25a) ausgegeben werden, eingibt, um den Motor (14) zu steuern, und die an den Handsteuerknopf (3) abhängig von der Art und Weise der Manipulation des Knopfs (3) an diesen eine externe Kraft gibt.

## Revendications

1. Dispositif d'entrée manuelle comprenant :
un moteur tournant (14) monté de manière mobile latéralement sur un châssis (12) ;
un bouton de commande manuelle (3) monté sur un arbre d'entraînement (14a) du moteur tournant (14) ;
un premier capteur de position (29), qui détecte une direction et une amplitude de mouvement latéral du moteur tournant (14) ;
un deuxième capteur de position (25a) qui détecte une direction et une amplitude de rotation de l'arbre d'entraînement (14a) du moteur tournant (14), et
un dispositif de commande, qui transmet des signaux de position délivrés par les premier et deuxième capteurs de position (29, 25a) pour commander le moteur (14) et qui applique une force extérieure au bouton de commande manuelle (3) en fonction de la façon dont le bouton (3) est manipulé.
